# EUROPÄISCHE PATENTSCHRIFT

(11) **EP 1 099 194 B1**
(45) Veröffentlichungstag und Bekanntmachung des Hinweises auf die Patenterteilung: **10.12.2003**
(21) Anmeldenummer: 99936573.7
(22) Anmeldetag: 20.07.1999
(51) Int. Cl.: G07B 15/02, G07F 7/00

(54) **VERFAHREN ZUR BESTÄTIGUNG EINES SACHVERHALTES ODER VON DATEN AUF ANFRAGE EINER PERSON**
METHOD FOR CONFIRMING A FACT OR DATA AT THE REQUEST OF A PERSON
PROCEDE POUR CONFIRMER UN ENONCE OU DES DONNEES SUR DEMANDE D'UN INDIVIDU

(30) Priorität: 22.07.1998 EP 98113621
(43) Veröffentlichungstag der Anmeldung: 16.05.2001
(73) Patentinhaber: Schweers, Michael, 40670 Meerbusch (DE); Aschenbroich, Marc, 33610 Cestas (FR)
(72) Erfinder: Schweers, Michael, 40670 Meerbusch (DE); Aschenbroich, Marc, 33610 Cestas (FR)
(74) Vertreter: DR. STARK & PARTNER
(86) Internationale Anmeldenummer: EP9905162
(87) Internationale Veröffentlichungsnummer: WO00005685

(56) Entgegenhaltungen:
- EP-A- 0 848 360
- WO-A-93/20539
- WO-A-96/11453
- WO-A-96/27170
- WO-A-96/32700
- WO-A-97/13222
- WO-A-97/19568
- WO-A-98/00956
- FR-A- 2 680 263

## Beschreibung

Die Erfindung betrifft ein Verfahren zur Bestätigung eines Sachverhaltes oder von Daten auf Anfrage einer Person an eine den entsprechenden Sachverhalt oder die entsprechenden Daten verwaltende Stelle, wobei die Stelle den angefragten Sachverhalt oder die Daten bei Richtigkeit bestätigt, wobei die Bestätigung durch zumindest ein Signal auf eine personenseitige Anzeigevorrichtung ausgegeben wird.

Derartige Verfahren finden heutzutage auf den unterschiedlichsten Gebieten des täglichen Lebens Anwendung. Ein Anwendungsgebiet ist beispielsweise die Bezahlung mittels einer Scheck- bzw. Kreditkarte. Nach Lesen dieser Scheck- bzw. Kreditkarte durch eine Lesevorrichtung wird eine entsprechende Anfrage - meistens die Kreditkartennummer - bei dem jeweiligen Kreditinstitut gestartet, das - im Falle einer ausreichenden Deckung des Kontos - den Abbuchungsauftrag bestätigt. Im einfachsten Fall kann diese Bestätigung auch auf telefonischem Wege erfolgen.

Eine andere Anwendung dieses Verfahrens ist die Buchung oder die Reservierung einer Eintritts- bzw. Fahrkarte. In diesem Fall muss der Kunde meistens in ein Reisebüro gehen, welches für den Kunden eine entsprechende Anfrage bei dem zuständigen Anbieter vornimmt. Sofern der gewünschte Platz verfügbar ist, bestätigt der Anbieter dies dem Reisebüro gegenüber. Nach Zahlung des entsprechenden Preises erhält der Kunde eine von dem Reisebüro bzw. dem Anbieter ausgestellte Eintritts- bzw. Fahrkarte. Es ist zwar möglich, dass der Kunde auch direkt bei dem Anbieter eine entsprechende Anfrage startet. Jedoch erhält er auch hier die Bestätigung, d. h. die entsprechenden Karten erst Tage später in Form eines Dokumentes auf dem Postweg, wobei er gegebenenfalls in dem Anruf noch die Kreditkartennummer zur Abbuchung des vereinbarten Preises angeben muss.

Weiterhin finden solche Verfahren Anwendung bei der Überprüfung von Dokumenten wie z. B. Personalausweis oder Führerschein durch die Polizei bei Fahrzeugkontrollen. Hierbei macht die Polizei eine telefonische Nachfrage bei der zuständigen Registrierungsstelle, die die Richtigkeit der Daten bestätigt.

Derartige Verfahren finden aber auch bei der Nutzung von gebührenpflichtigen Parkflächen Anwendung. Der Benutzer, der sein Fahrzeug auf einer derartigen Fläche abgestellt hat, entrichtet an einem Automaten die entsprechende Parkgebühr, wobei die Stelle, d. h. der Parkautomat in diesem Fall bei ausreichend frei zur Verfügung stehenden Parkflächen den angefragten Sachverhalt durch Ausgabe eines Parkbeleges bestätigt.

Zwar gibt es bei neueren Systemen die Möglichkeit, das der Benutzer per Handy oder per Telefon eine Stelle anruft und sein Fahrzeug anmeldet. Hierbei nennt er seinen persönlichen Code, die Nummer des betreffenden Parkplatzes oder das Kraftfahrzeugkennzeichen. Nach Beendigung der Parkzeit muss der Benutzer erneut die Stelle anrufen, um den Parkplatz abzumelden. Insofern bezahlt der Benutzer nur die Zeit, die er tatsächlich geparkt hat. Die Abrechnung erfolgt durch die Sammelstation z. B. über Kreditkarten oder über die normale Telefonabrechnung.

Als nachteilig bei dem zuletzt genannten Verfahren erweist sich aber die schlechte Überwachbarkeit des Anmeldens des Fahrzeuges durch die Überwachungskräfte. So müssen die Überwachungskräfte über Mobilfunk oder über ein Telefon bei der Stelle nachfragen, ob der Benutzer sein Fahrzeug auch tatsächlich angemeldet hat. Hierbei gibt die Überwachungskraft beispielsweise das Fahrzeugkennzeichen oder aber eine sonstige Kennung wie z. B. die Nummer des jeweiligen Parkplatzes an. Damit die Überwachungskraft lükkenlos kontrollieren kann, ob alle geparkten Fahrzeuge angemeldet sind, muss daher für jedes Fahrzeug erneut nachgefragt werden. Auch bei Einsatz von mobilen Handgeräten mit einer Vorrichtung zur elektronischen Kennzeichenlesung muss für jedes Fahrzeug eine separate Anfrage bei der Stelle gestartet werden.

Zur Vermeidung dieser Nachteile sind in unterschiedlichen Anwendungsbereichen verschiedene Vorgehensweisen vorgeschlagen worden.

So kann z. B. gemäß der WO 97/13222 beim Parken von Fahrzeugen ein Fahrzeugbenutzer über eine Sende/Empfangseinrichtung sich bei einem Zentralcomputer eines Park-Netzwerkes anmelden und ein Park-Authorisations-Signal von diesem empfangen, das auf einer Anzeigevorrichtung angezeigt wird.

Nachteilig hierbei ist, dass die Echtheit der Anzeige eines Park-Authorisations-Signals nur durch eine separate Anfrage, wie z. B. einen Kontrollanruf oder dergleichen von einer Überwachungskraft bei der zentralen Stelle überprüft werden kann.

Die Überwachung ist somit sowohl äußerst kostenintensiv als auch zeitaufwendig, was dem Ziel einer schnelleren und einfacheren Überwachung des Straßenverkehrs zuwiderläuft.

Aufgabe der Erfindung ist es, ein Verfahren anzugeben, bei dem der Sachverhalt oder die angezeigten Daten des Anfragenden schneller als authentisch und echt erkannt werden können.

Diese Aufgabe wird dadurch gelöst, dass in der Anzeigevorrichtung eine als Smart-Card ausgebildete Identifizierungseinrichtung vorgesehen ist, die zum einen eine Identifizierung der jeweiligen Anzeigevorrichtung ermöglicht und zum anderen sicherstellt, dass eine nicht zu manipulierende Nachricht von der Stelle an die so identifizierte Anzeigevorrichtung ausgesandt und auf dieser zur Anzeige gebracht wird.

Bei dieser Mitteilung kann, wenn es sich beispielsweise um die Reservierung einer Flugkarte handelt, auf der Anzeigevorrichtung neben der Flugzeit auch die Flugnummer, der Platz sowie eventuelle Check-In-Zeiten sichtbar gemacht werden. Das gleiche gilt beispielsweise für die Reservierung eines Platzes in einem Theater. Sofern mittels dieses Verfahrens eine Parkgebühr entrichtet wird, können Angaben, wie beispielsweise das Datum, die Zeit der Anmeldung, die Kennzeichnung der Parkfläche oder ein bestimmter Code angezeigt werden. Die Überwachungskraft kann nun bereits optisch erkennen, ob das Fahrzeug angemeldet wurde, und somit ein Verstoß gegen das Straßenverkehrsgesetz vorliegt. Dabei weisen derartige Smart-Cards einen eingebauten Mikroprozessor als Speicher auf, auf dem bestimmte Verschlüsselungsalgorithmen abgelegt sind. Bei Empfang eines von der Stelle ausgestrahlten Signals werden bestimmte in der Smart-Card gespeicherte Parameter mit dem Signal verglichen. Stimmen die Parameter überein, so wird das Signal zur Anzeige gebracht. Diese Smart-Card, die in die Anzeigevorrichtung eingesteckt ist, ermöglicht, dass zum einen eine Identifizierung der jeweiligen Anzeigevorrichtung möglich ist und zum anderen eine nicht zu manipulierende Nachricht von der Stelle an die so identifizierte Anzeigevorrichtung ausgesandt und auf dieser zur Anzeige gebracht wird.

Durch dieses erfindungsgemäße Verfahren ist es möglich, das zu jedem gewünschten Zeitpunkt und an jedem Ort eine nicht zu manipulierende Nachricht von der Stelle an die so identifizierte Anzeigevorrichtung ausgesandt und auf dieser zur Anzeige gebracht wird. Die Anfrage selbst kann beispielsweise telefonisch erfolgen, wobei die Bestätigung dann von der Stelle an die Anzeigevorrichtung übertragen wird. Es bedarf daher keiner Ausstellung z. B. eines Tickets oder Parkscheines mehr. Dies erleichtert z. B. die Reservierung von Flugtickets bzw. von Theatervorführungen, da der Anfragende auf Anfrage bei der Stelle eine Bestätigung erhält. Betritt er beispielsweise das Flugzeug oder das Theater, so zeigt er einfach die Anzeigevorrichtung mit der Bestätigung vor.

Eine andere mögliche Anwendung ist beispielsweise die Überprüfung von amtlichen Dokumenten. Im Falle einer Überprüfung durch die Polizei kann die sich auszuweisende Person eine Anfrage an die entsprechende Registrierungsstelle richten, die unmittelbar die betreffenden Daten bestätigt, so dass die Polizei die aktuellen Daten erhält und die betreffende Person keine amtlichen Dokumente mehr mit sich führen muss.

Zweckmäßigerweise kann die an die Stelle ausgesandte Anfrage über einen mit der Anzeigevorrichtung verbundenen Sender abgegeben werden. Dies hat den Vorzug, dass nicht beispielsweise vor Anfrage eine Telefonzelle aufgesucht werden muss, um die Anfrage an die Stelle zu richten.

Das erfindungsgemäße Verfahren kann u. a. für die Bestätigung einer Zahlung eines Betrages bzw. einer Gebühr verwendet werden. Der Kunde macht entweder bei dem für ihn zuständigen Kreditinstitut mittels eines Telefonats eine Anfrage, oder er übermittelt diese - sofern die Anzeigevorrichtung mit einem Sender verbunden ist - unmittelbar an die Stelle, wobei die Stelle bei ausreichender Deckung des Kontos die Zahlung an die Anzeigevorrichtung bestätigt. Die Anfrage beinhaltet beispielsweise die Kreditkartennummer und den Kaufpreis. Die betreffende Person, an die die Zahlung zu leisten ist, kann sich entweder mit der auf der Anzeigevorrichtung angezeigten Bestätigung begnügen oder kann zur Kontrolle nochmals beispielsweise telefonisch bei der Stelle nachfragen. Es ist aber auch durchaus möglich, dass zusätzlich eine Bestätigung von der Stelle an die Person, an die die Zahlung zu leisten ist, erfolgt .

Es liegt auf der Hand, dass hiermit nicht nur Zahlungen in Geschäften oder auch in Reisebüros, Freizeitparks, Theatern, Restaurants oder dergleichen geleistet werden können, sondern sämtliche Käufe möglich sind.

Im Gegensatz zu sogenannten "Cash-Cards", die zunächst mit einem Geldbetrag aufgeladen werden müssen und insofern für Diebe interessant sind, werden auf der Anzeigevorrichtung lediglich erfolgte Zahlungen bestätigt. Insofern ist diese für Dritte nicht verwendbar.

Zweckmäßigerweise kann die Anfrage an die den Sachverhalt oder die Daten verwaltende Stelle verschlüsselt abgegeben werden. Hierdurch wird der Missbrauch eingeschränkt, da der Benutzer bei Anfrage diese zunächst mit einem Schlüssel, der die Stelle kennt, verschlüsseln muss, wobei der Schlüssel beispielsweise von der Stelle vorgegeben wird oder aber der Benutzer diesen selbst auswählt.

Zweckmäßigerweise kann die Anfrage vor Absenden an die Stelle mit einem in der Anzeigevorrichtung hinterlegten Schlüssel, ein sogenannte "Private-Key" verschlüsselt werden. In diesem Fall wird der Schlüssel - meistens von der Stelle vorgegeben - in der Anzeigevorrichtung hinterlegt. Die Anfrage wird vor Absenden automatisch verschlüsselt und an die Stelle gesandt, der der Schlüssel ebenfalls bekannt ist und die die Anfrage entsprechend entschlüsselt.

Um den Missbrauch noch weiter auszuschließen, kann die Anfrage vor Absenden an die Stelle mit einem vorher von der Stelle übermittelten Schlüssel, einem sogenannten "Public-Key", verschlüsselt bzw. zusätzlich verschlüsselt werden. Dieser so von der Stelle übermittelte Schlüssel kann im einfachsten Fall ein sogenannter "Time-Stamp" sein, der immer variiert. Die an die Stelle zu übersendende Anfrage wird entweder lediglich mit diesem Schlüssel (Public-Key) oder aber zusätzlich mit dem in der Anzeigevorrichtung hinterlegten weiteren Schlüssel (Private-Key) verschlüsselt. Die Stelle entschlüsselt die entsprechende Anfrage und bestätigt diese. Sofern die Anfrage mit zwei Schlüsseln verschlüsselt wird, können - selbst im Falle des Mitlesens des von der Stelle übermittelten Schlüssels (Public-Key) durch einen Dritten - keine Rückschlüsse auf die Anfrage gemacht werden, da der sich von der Stelle übermittelte Schlüssel (Public-Key) beim nächsten Mal wieder ändert und der andere Schlüssel (Private-Key) nicht bekannt ist. Insofern kann die Anfrage problemlos die Kreditkartennummer umfassen, ohne dass diese von Dritten entschlüsselt werden kann.

Eine andere Anwendung des erfindungsgemäßen Verfahren ist die Überwachung einer gebührenpflichtigen Nutzung einer Fläche, insbesondere Parkfläche. Wenn ein Autofahrer sein Fahrzeug bei der Stelle angemeldet hat, wird automatisch eine Bestätigung von der Stelle an die Anzeigevorrichtung ausgesandt. Die Bestätigung selbst kann im einfachsten Falle aus einem Aufleuchten einer Lampe bestehen, die im Falle einer Bestätigung aufleuchtet. Es kann aber auch ein handelsüblicher Pager sein, der aus einem Display und einem Speicher besteht. Die von der Stelle an den als Anzeigevorrichtung dienenden Pager versandte Bestätigung wird auf dem Display des Pagers zur Anzeige gebracht.

Es bedarf keiner weiteren Erläuterungen, daß dieses Verfahren nicht nur zur Überwachung von Parkflächen für Fahrzeuge, sondern auch beispielsweise zur Überwachung von Stellflächen für Marktstände oder ähnliches eingesetzt werden kann. Durch den Meldeanruf erfolgt beispielsweise die Freischaltung des Stromanschlusses. Gleichzeitig wird von der Sammelstation eine Meldung über das Datum und die Zeit sowie über den betreffenden Standort ausgesandt und über die Anzeigevorrichtung zur Anzeige gebracht. Bei einer derartigen Verwendungsweise ist die Anzeigevorrichtung vorzugsweise an dem die Stellfläche belegenden Gegenstand wie z. B. dem Marktstand angebracht. Das erfindungsgemäße Verfahren kann aber auch als Zugangssystem für Fußgängerzonen benutzt werden. Durch den Meldeanruf erfolgt z. B. die Aktivierung von Zugangsschranken oder Pollern, wobei zeitgleich ein entsprechendes Zugangssignal für die Überwachungskräfte an die Anzeigevorrichtung ausgesandt wird.

Zweckmäßigerweise kann die Anzeigevorrichtung zur einfachen Überprüfung der Gebührenzahlung am auf der Fläche befindlichen Gegenstand angeordnet sein. Eine Überwachungskraft erkennt durch den Blick auf die Anzeigevorrichtung unmittelbar, ob das Fahrzeug angemeldet wurde. Sollten darüber hinaus noch Zweifel an der Echtheit der durch die Anzeigevorrichtung angezeigten Informationen bestehen, kann die Überwachungskraft durch Anruf bei der Stelle die korrekte Anmeldung des Fahrzeuges kontrollieren.

Vorteilhafterweise kann die Abrechnung einer eventuell zu zahlenden Gebühr unmittelbar über die die Daten verwaltende Stelle erfolgen. Die die Anfrage bestätigende Stelle kann die zu zahlende Gebühr z. B. bei dem Kreditkarteninstitut der anfragenden Person abbuchen, oder aber direkt eine Rechnung an die anfragende Person schicken.

Es besteht aber auch durchaus die Möglichkeit, dass zur Abrechnung eine zuvor mit Geld aufgeladene Karte in die Anzeigevorrichtung eingeführt wird, wobei der auf der aufgeladenen Karte hinterlegte Betrag um den entsprechenden Betrag verringert wird.

Zusätzlich kann die Anzeigevorrichtung codierbar sein. Bei Betätigung der Anzeigevorrichtung muss der entsprechende Code eingegeben werden, da anderenfalls keine Bestätigungen sichtbar gemacht werden können.

Auch kann die Anzeigevorrichtung als Werbeträger dahingehend verwendet werden, dass bestimmte Mitteilungen, die für die um die Parkfläche herumliegende Umgebung von Bedeutung bzw. Interesse sein könnten, übermittelt werden. Dies könnten beispielsweise Änderungen der Parkplatzordnung in diesem Bereich oder aber auch Werbemitteilungen von umliegenden Geschäften sein.

Im Folgenden werden in den Zeichnungen dargestellte Ausführungsbeispiele der Erfindung erläutert. Es zeigen:
- Fig. 1: den Ablauf eines erfindungsgemäßen Verfahrens zur Bestätigung eines zu zahlenden Betrages mit einer Anzeigevorrichtung, die lediglich zur Einwegkommunikation dient,
- Fig. 2: den Ablauf eines erfindungsgemäßen Verfahrens zur Überwachung von Flächennutzungen, insbesondere von gebührenpflichtigen Parkflächen, mit einer Anzeigevorrichtung, die lediglich zur Einwegekommunikation dient, und
- Fig. 3: den Ablauf des Verfahrens nach Fig. 2 bei Verwendung einer Anzeigevorrichtung, die zur Zweiwegekommunikation dient.

In den Figuren werden für gleiche bzw. gleichartige Teile die gleichen Bezugszeichen verwendet.

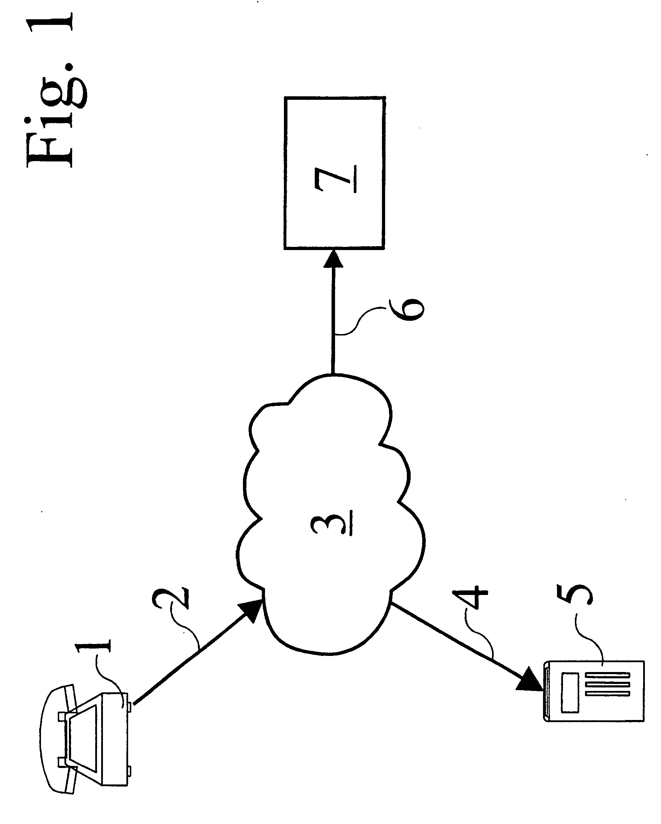

Wie in Fig. 1 dargestellt, wird über ein Telefon 1 eine Anfrage 2 an eine Stelle 3 gestartet. Bei dieser Stelle 3 handelt es sich beispielsweise - sofern ein Flugticket bestellt werden soll - um ein Luftfahrtunternehmen. Die Anfrage 2 kann in diesem Fall zum einen die Nachfrage hinsichtlich der Reservierung eines bestimmten Fluges und zum anderen direkt die Kreditkartennummer - vorzugsweise verschlüsselt - beinhalten.

Die Stelle 3 sendet - sofern die gewünschte Anzahl an Plätzen frei ist und gegebenenfalls nach Prüfung der Zahlungsfähigkeit des Anfragenden - eine Bestätigung in Form eines Signals 4 an eine personenseitige Anzeigevorrichtung 5 des Anfragenden aus. Gleichzeitig sendet die Stelle 3 ein Signal 6 an ein den Anfragenden betreuendes Kreditinstitut 7, das beispielsweise den entsprechenden Betrag mittels einer Kreditkarte abbucht oder einem Konto des Anfragenden schlecht schreibt. Es ist aber auch durchaus möglich, dass die Stelle 3 unmittelbar eine Rechnung an den die Anfrage 2 stellende Person richtet.

Das Signal 4 kann nicht nur den Hinweis, dass der Betrag entrichtet wurde, sondern ebenfalls Angaben über die Flugnummer, die Flugabfahrtszeiten, oder die Check-In-Zeiten enthalten.

Hierdurch ist z. B. nicht mehr erforderlich, dass das Flugunternehmen ein Tickt ausstellen muss. Beim Einchecken ruft der Anfragende die Bestätigung, die in der Anzeigevorrichtung 5 nach Übersenden des Signals 4 von der Stelle 3 hinterlegt ist, auf und zeigt sie dem Überwachungspersonal. Ein weiterer Vorteil ist, dass beispielsweise kurzfristige Flüge gebucht werden können, ohne dass der Anfragende vor Besteigen. des Flugzeuges zum Ticketschalter gehen muss, um sich das Ticket ausstellen zu lassen.

Sofern die Anzeigevorrichtung 5 über einen Sender verfügt, kann die Anfrage 2 auch über die Anzeigevorrichtung 5 erfolgen.

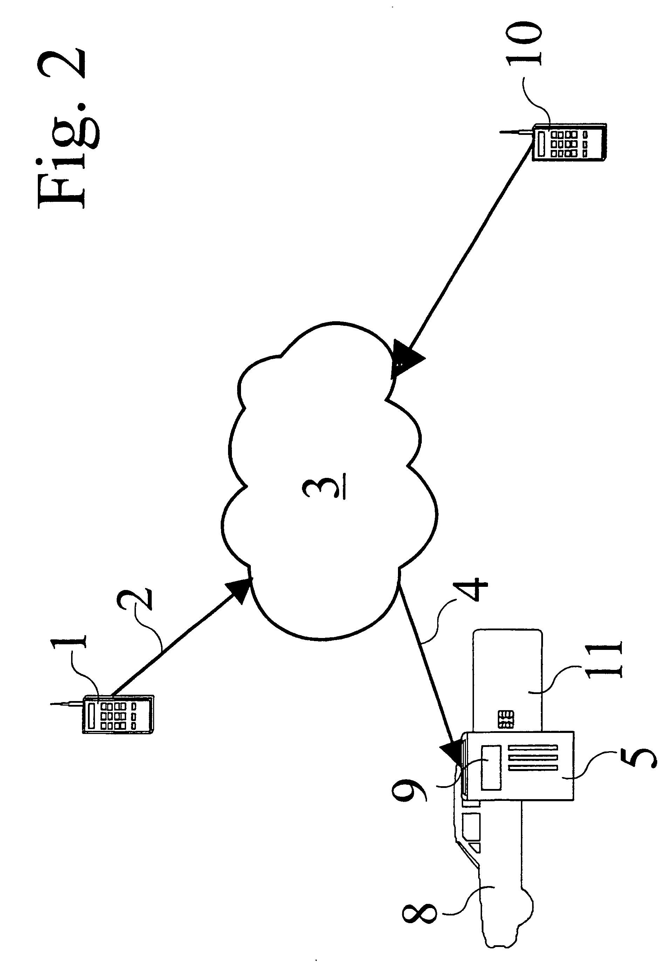

In Fig. 2 ist der Ablauf eines erfindungsgemäßen Verfahrens am Beispiel der Überprüfung der Gebührenzahlung am auf einer Fläche befindlichen Gegenstand dargestellt. Über ein Telefon 1 meldet sich der Autofahrer mittels der Anfrage 2 bei der Stelle 3 an. Daraufhin sendet die Stelle 3 die Bestätigung in Form des Signals 4 an die Anzeigevorrichtung 5, die in diesem Fall in einem Fahrzeug 8 montiert ist. Die Anzeigevorrichtung 5 verfügt über ein Display 9, das das Signal 4 der Stelle 3 zur Anzeige bringt. Die Überwachungskraft, die die ordnungsgemäße Anmeldung des Fahrzeuges 8 kontrolliert, kann das Display 9 ablesen und weiß sofort, ob das Fahrzeug 8 angemeldet ist.

Bestehen seitens der Überwachungskraft Bedenken betreffend der in der Anzeigevorrichtung 5 angezeigten Nachricht, so kann die Überwachungskraft beispielsweise über ein Mobilfunk 10 die Stelle 3 anrufen und die Anmeldung des Fahrzeuges 8 kontrollieren.

Damit das von der Stelle 3 ausgesandte Signal 4 nicht manipuliert werden kann und die Anzeigevorrichtung 5 identifizierbar ist, ist in der als Pager ausgebildeten Anzeigevorrichtung 5 eine Verschlüsselungseinrichtung 11, die in diesem Beispiel eine Smard-Card ist, vorgesehen, die in die Anzeigevorrichtung 5 eingeführt wird.

Die Abrechnung der zu zahlenden Park- bzw. Nutzungsgebühr erfolgt beispielsweise unmittelbar über die Stelle 3 mit einem Kreditinstitut.

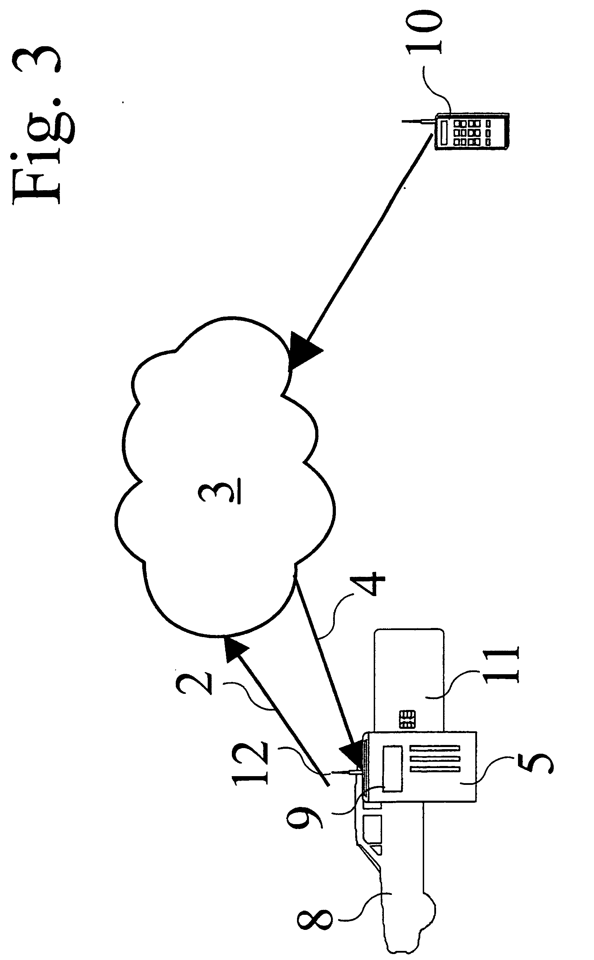

Fig. 3 zeigt das in Fig. 2 dargestellte Verfahren bei Verwendung der Anzeigevorrichtung 5 mit einem Sender 12. In diesem Fall eignet sich die Anzeigevorrichtung 5 zur Zweiwegekommunikation, da sie sowohl Senden als auch Empfangen kann.

Bei Benutzung einer Parkfläche sendet die Anzeigevorrichtung 5 über den Sender 12 die Anfrage 2 an die Stelle 3 aus. Es bedarf somit zur Anmeldung keines Telefons 1 mehr. Die Stelle 3 empfängt die Anfrage 2 und sendet daraufhin die Bestätigung in Form des Signals 4 an die Anzeigevorrichtung 5, die durch die Anzeigevorrichtung 5 zur Anzeige gebracht wird. Die Richtigkeit der durch die Anzeigevorrichtung 5 angezeigten Nachricht kann die Überwachungskraft - sofern erforderlich - über das Mobilfunk 10 bei der Stelle 3 erfragen.

Die Abrechnung erfolgt über die Stelle 3 mit einem Kreditinstitut. Es ist aber z. B. auch denkbar, dass die als Verschlüsselungseinrichtung 11 in der Anzeigevorrichtung 5 vorgesehene Smart-Card elektronisch mit Geld aufgeladen wird, so dass die Parkgebühr unmittelbar von der Smart-Card abgebucht wird.

## Patentansprüche

1. Verfahren zur Bestätigung eines Sachverhaltes oder von Daten auf Anfrage (2) einer Person an eine den entsprechenden Sachverhalt oder die entsprechenden Daten verwaltende Stelle (3), wobei die Stelle (3) den angefragten Sachverhalt oder die Daten bei Richtigkeit bestätigt, wobei die Bestätigung durch zumindest ein Signal (4) auf eine personenseitige Anzeigevorrichtung (5) ausgegeben wird, und als Signal (4) eine Mitteilung von der Stelle (3) an die Anzeigevorrichtung (5) ausgegeben wird, **dadurch gekennzeichnet dass** in der Anzeigevorrichtung (5) eine als Smart-Card ausgebildete Identifizierungseinrichtung vorgesehen ist, die zum einen eine Identifizierung der jeweiligen Anzeigevorrichtung (5) ermöglicht und zum anderen sicherstellt, dass eine nicht zu manipulierende Nachricht von der Stelle (3) an die so identifizierte Anzeigevorrichtung (5) ausgesandt und auf dieser zur Anzeige gebracht wird.

2. Verfahren nach Anspruch 1, **dadurch gekennzeichnet, dass** die an die Stelle (3) ausgesandte Anfrage (2) über einen mit der Anzeigevorrichtung (5) verbundenen Sender (12) abgegeben wird.

3. Verfahren nach Anspruch 1 oder 2, **dadurch gekennzeichnet, dass** die Bestätigung eines Sachverhaltes oder von Daten die Zahlung eines Betrages bzw. einer Gebühr betrifft.

4. Verfahren nach einem der Ansprüche 1 bis 3, **dadurch gekennzeichnet, dass** die Anfrage (2) an die den Sachverhalt oder die Daten verwaltende Stelle (3) verschlüsselt abgegeben wird.

5. Verfahren nach Anspruch 4, soweit dieser auf Anspruch 2 rückbezogen ist, **dadurch gekennzeichnet, dass** die Anf rage (2) vor Absenden an die Stelle (3) mit einem in der Anzeigevorrichtung (5) hinterlegten Schlüssel verschlüsselt wird.

6. Verfahren nach Anspruch 4 oder 5, **dadurch gekennzeichnet, dass** die Anfrage (2) vor Absenden an die Stelle (3) mit einem vorher von der Stelle (3) übermittelten Schlüssel verschlüsselt bzw. zusätzlich verschlüsselt wird.

7. Verfahren nach einem der Ansprüche 1 bis 6, **dadurch gekennzeichnet, dass** die Zahlung die gebührenpflichtige Nutzung einer Fläche, insbesondere Parkfläche betrifft.

8. Verfahren nach Anspruch 7, **dadurch gekennzeichnet, dass** die Anzeigevorrichtung (5) zur einfachen Überprüfung der Gebührenzahlung am auf der Fläche befindlichen Gegenstand angeordnet ist.

9. Verfahren nach einem der Ansprüche 1 bis 8, **dadurch gekennzeichnet, dass** die Abrechnung einer eventuell zu zahlenden Gebühr unmittelbar über die die Daten verwaltende Stelle (3) erfolgt.

10. Verfahren nach einem der Ansprüche 1 bis 9, **dadurch gekennzeichnet, dass** zur Abrechnung eine zuvor mit Geld aufgeladene Karte in die Anzeigevorrichtung (5) eingeführt wird.

11. Verfahren nach einem der Ansprüche 1 bis 10, **dadurch gekennzeichnet, dass** die Anzeigevorrichtung (5) codierbar ist.

## Claims

1. Method of confirming a fact or data in response to a request (2) made by a person to a location (3) which administers the appropriate fact or the appropriate data, the location (3) confirming the requested fact or the data, if correct, the confirmation being issued by at least one signal (4) to a display device (5) facing the person, and a communication being issued as signal (4) from the location (3) to the display device (5), **characterised in that** a means of identification, in the form of a smart card, is provided in the display device (5), said means of identification, on the one hand, permitting identification of the respective display device (5) and, on the other hand, ensuring that a message, which cannot be manipulated, is transmitted from the location (3) to the display device (5), thus identified, and is displayed on said device.

2. Method according to claim 1, **characterised in that** the request (2), transmitted to the location (3), is delivered via a transmitter (12) connected to the display device (5).

3. Method according to claim 1 or 2, **characterised in that** the confirmation of a fact or of data relates to the payment of a sum of money, or respectively, a fee.

4. Method according to one of claims 1 to 3, **characterised in that** the request (2) to the location (3) administering the fact or the data is delivered in an encripted manner.

5. Method according to claim 4, provided that said claim relates to claim 2, **characterised in that**, prior to being sent to the location (3), the request (2) is encripted with a key input in the display device (5).

6. Method according to claim 4 or 5, **characterised in that**, prior to being sent to the location (3), the request (2) is encripted with a key previously transmitted from the location (3), or respectively said request is additionally encripted.

7. Method according to one of claims 1 to 6, **characterised in that** the payment relates to the chargeable use of an area, more especially a parking area.

8. Method according to claim 7, **characterised in that** the display device (5) is disposed on the article situated in the area for the simple checking of payment of the fee.

9. Method according to one of claims 1 to 8, **characterised in that** any fee to be paid is directly deducted via the location (3) administering the data.

10. Method according to one of claims 1 to 9, **characterised in that**, for settling purposes, a card, previously credited with money, is introduced into the display device (5).

11. Method according to one of claims 1 to 10, **characterised in that** the display device (5) is codable.

## Revendications

1. Procédé pour confirmer un énoncé ou des données, sur demande (2) d'un individu, par un organisme (3) gérant l'énoncé correspondant ou les données correspondantes, l'organisme (3) confirmant en cas d'exactitude l'énoncé demandé ou les données, la confirmation étant délivrée par au moins un signal (4) sur un dispositif d'affichage (5) côté utilisateur, et une communication de l'organisme (3) au dispositif d'affichage (5) étant délivrée comme signal (4), **caractérisé en ce qu'**un équipement d'identification réalisé sous forme de carte à puce (« smart card ») est prévu dans le dispositif d'affichage (5), équipement qui, d'une part permet une identification du dispositif d'affichage respectif (5), et d'autre part garantit qu'un message impossible à manipuler est transmis par l'organisme (3) au dispositif d'affichage (5) ainsi identifié, et est affiché sur ce dernier.

2. Procédé selon la revendication 1, **caractérisé en ce que** la demande (2) transmise à l'organisme (3) est délivrée par l'intermédiaire d'un émetteur (12) assemblé au dispositif d'affichage (5).

3. Procédé selon la revendication 1 ou 2, **caractérisé en ce que** la confirmation d'un énoncé ou de données concerne le payement d'une somme ou d'une redevance.

4. Procédé selon l'une des revendications 1 à 3, **caractérisé en ce que** la demande (2) est délivrée de manière codée à l'organisme (3) gérant l'énoncé ou les données.

5. Procédé selon la revendication 4, pour autant que celui-ci se réfère à la revendication 2 **caractérisé en ce que** la demande (2) est, avant d'être envoyée à l'organisme (3), codée au moyen d'une clé déposée dans le dispositif d'affichage (5).

6. Procédé selon la revendication 4 ou 5, **caractérisé en ce que** la demande (2) est, avant d'être envoyée à l'organisme (3), codée uniquement ou en plus au moyen d'une clé préalablement transmise par l'organisme (3).

7. Procédé selon l'une des revendications 1 à 6, **caractérisé en ce que** le payement concerne l'utilisation d'une surface soumise à redevance, notamment d'une surface de parking.

8. Procédé selon la revendication 7, **caractérisé en ce que** le dispositif d'affichage (5) est, en vue d'un contrôle simple du payement de la redevance, disposé sur l'objet se trouvant sur la surface.

9. Procédé selon l'une des revendications 1 à 8, **caractérisé en ce que** le règlement d'une éventuelle redevance à payer s'effectue directement par l'intermédiaire de l'organisme (3) gérant les données.

10. Procédé selon l'une des revendications 1 à 9, **caractérisé en ce que**, pour le règlement, une carte préalablement chargée d'une somme d'argent est introduite dans le dispositif d'affichage (5).

11. Procédé selon l'une des revendications 1 à 10, **caractérisé en ce que** le dispositif d'affichage (5) peut être pourvu d'un code d'accès.
